# EUROPÄISCHE PATENTANMELDUNG

(11) **EP 0 597 194 A2**
(43) Veröffentlichungstag der Anmeldung: **18.05.1994**
(21) Anmeldenummer: 93112921.7
(22) Anmeldetag: 12.08.1993
(51) Int. Cl.: G01S 15/88

(54) **Luftschallecholot**

(30) Priorität: 12.11.1992 DE 4238111
(71) Anmelder: ATLAS ELEKTRONIK GmbH, D-28305 Bremen (DE)
(72) Erfinder: Thiele, Rudolf, Dr., D-27753 Delmenhorst (DE)

(57) **Zusammenfassung**

Es wird ein Luftschallecholot zur meteorologischen Fernmessung in der Atmosphäre, insbesondere zur Windmessung vom Boden aus, angegeben, bei welchem zur Reduzierung des äußerst störenden, oberhalb der Schmerzgrenze des menschlichen Ohrs liegenden Schallpegels eine Sendeeinrichtung zwei unterschiedliche, jeweils oberhalb des menschlichen Hörbereichs liegende hohe Sendefrequenzen aussendet, wobei die Differenzfrequenz der beiden Sendefrequenzen im Hörbereich liegt. Mit einer Empfangseinrichtung werden zurückgestreute Echosignale empfangen und ausgewertet, deren Frequenz infolge des bei der Schallausbreitung in Luft auftretenden parametrischen Phänomens der Differenzfrequenz entspricht.

## Beschreibung

Die Erfindung betrifft ein Luftschallecholot der im Oberbegriff des Anspruchs 1 definierten Art.

Luftschallecholote sind mannigfaltig bekannt und werden zur meteorologischen Fernmessung, insbesondere zur Windmessung vom Boden aus, verwendet. Mit ihnen werden Windprofile in typischen Höhen bis zu einigen hundert Metern, mitunter auch weit über einen Kilometer erstellt. Solche Windprofile sind von Interesse im Zusammenhang mit Windstärken- oder Windgeschwindigkeitsmessungen, Schadstoffausbreitung und Atmosphärenbeobachtungen, wie Luftschichtung und dergleichen, und mit anderen meteorologischen Anwendungen. Auch bei Flughäfen werden solche Luftschallecholote eingesetzt, um Windgeschwindigkeit und Windrichtung in verschiedenen Höhenlagen zu messen.

Luftschallecholote, auch Akustik-Radare, Acdar oder Sodar genannt, werden sowohl als bistatische als auch als monostatische Systeme ausgeführt. Bistatische Systeme sind beispielsweise aus der US-PS 3 889 533 oder der US-PS 4 219 887 bekannt. Ein monostatisches System ist in der US-PS 4 558 594 beschrieben. Alle diese Luftschallecholote arbeiten zur Erzielung einer ausreichenden Reichweite mit einer Sendefrequenz von typischerweise 1 bis 5 kHz, also im hörbaren Schallbereich. Sie erzeugen damit am Aufstellungsort des Senders am Boden einen äußerst störenden Schallpegel, der zum Teil oberhalb der Schmerzgrenze des menschlichen Ohrs liegt. Häufig eingesetzte lange Trichterkonstruktionen zur Vermeidung der seitlichen Lärmabstrahlung haben nur einen recht begrenzten Nutzen.

Der Erfindung liegt die Aufgabe zugrunde, bei einem Luftschallecholot der eingangs genannten Art den Lärmpegel beträchtlich zu reduzieren.

Die Aufgabe ist bei einem Luftschallecholot der im Oberbegriff des Anspruchs 1 definierten Gattung erfindungsgemäß durch die Merkmale im Kennzeichenteil des Anspruchs 1 gelöst.

Das erfindungsgemäße Luftschallecholot hat den Vorteil, daß es sendeseitig im unhörbaren Schallbereich arbeitet, ohne daß seine Reichweite eingeschränkt oder seine Funktionsqualität beeinträchtigt wird. Die beiden gerichtet ausgesendeten Frequenzen, die einander in dem Medium Luft mit seinen nichtlinearen Übertragungseigenschaften durchsetzt sind, erzeugen eine den Wechselwirkungsbereich verlassende, wiederum gerichtete Frequenz, die der Differenzfrequenz aus den beiden Sendefrequenzen entspricht. Der gerichtete nunmehr tieffrequente Schallstrahl wird im Medium Luft gestreut und ein Teil der daraus resultierenden Echosignale mit dieser tiefen Differenzfrequenz werden von der Empfangseinrichtung aufgenommen. Der Wechselwirkungsbereich, in dem sich die tiefe, hörbare Frequenz ausbildet, beginnt erst in größerer Höhe über dem Boden, so daß in Bodennähe die Sendeseite nicht zu hören ist. Empfängerseitig wird zwar der hörbare Luftschall empfangen, doch ist der Pegel der aus der Atmosphäre zurückgestreuten Echosignale relativ klein, so daß der hörbare Schallpegel weit unter dem als Belästigung empfundenen Niveau bleibt. Das erfindungsgemäße Echolot ist damit für die Aufstellung in bewohnten Gebieten geeignet, z.B. in stadteingebundenen oder stadtnahen Flughäfen. Obwohl mit unhörbaren Sendefrequenzen gearbeitet wird, erfolgt die Signalauswertung in dem gleichen tiefen Frequenzbereich wie bei den herkömmlichen Luftschallecholoten, so daß die Funktionsqualität in keiner Weise beeinträchtigt wird.

Das bei dem Luftschallecholot erfindungsgemäß angewandte parametrische Phänomen der Erzeugung einer tiefen Frequenz durch die Durchsetzung zweier geringfügig differierenden, hohen Frequenzen in einem Medium mit nichtlinearen Eigenschaften ist seit längerem bekannt und wurde technisch erstmals bei der Unterwasserschallortung eingesetzt (DE-AS 2 204 028). Hierbei sollte die günstige Eigenschaft von Schallenergie hoher Frequenz bezüglich des guten räumlichen Auflösungsvermögens mit den günstigen Eigenschaften von Schallenergie niedriger Frequenz bezüglich des guten Durchdringungsvermögens des Wassers und damit des Erreichens von großen Ortungsreichweiten kombiniert werden. Bekanntermaßen wird bei gleichen Abmessungen der Sendeantenne mit einer hohen Sendefrequenz eine sehr viel höhere Bündelung des ausgesendeten Schallstrahls erreicht, als mit einer tiefen Sendefrequenz. Die verbesserte Bündelung hat ein besseres Auflösevermögen der Anlage bezüglich der Ortung von Gegenständen zur Folge.

Hohe Sendefrequenzen werden jedoch im Wasser sehr viel stärker gedämpft, so daß die Reichweiten sehr begrenzt sind und hohe Reichweiten nur mit tiefen Sendefrequenzen erreicht werden können.

Da, wie vorstehend ausgeführt, bei gleichen Antennenabmessungen mit hohen Sendefrequenzen eine viel höhere Bündelung des Sendestrahls als mit tiefen Frequenzen erreichbar ist, kann dieser zusätzliche Vorteil auch bei dem erfindungsgemäßen Luftschallecholot genutzt werden. Will man die mit den herkömmlichen Luftschallecholoten angestrebte Bündelung auch bei dem erfindungsgemäßen Luftschallecholot erreichen, so kann dessen Sendeantenne sehr viel kleiner gemacht werden als bei den herkömmlichen Luftschallecholoten.

Die Erfindung ist anhand eines in der Zeichnung dargestellten Ausführungsbeispiels nachfolgend näher beschrieben. Dabei zeigt die Zeichnung ein Blockschaltbild eines Luftschallecholots.

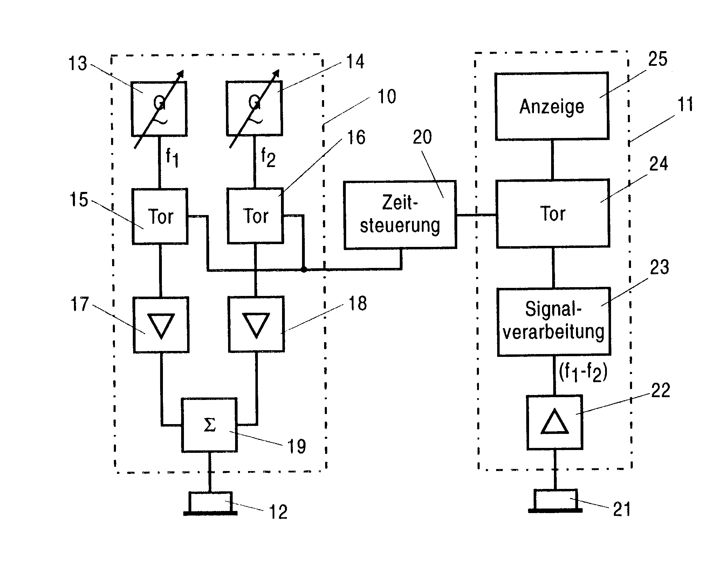

Das in Fig. 1 in seinem Aufbau im Blockschaltbild dargestellte Luftschallecholot weist eine Sendeeinrichtung 10 und eine Empfangseinrichtung 11 auf. Mittels der Sendeeinrichtung 10 wird über eine in Bodennähe installierte Sendeantenne 12 gleichzeitig Schallenergie der Sendefrequenz f₁ und Schallenergie der Sendefrequenz f₂ impulsförmig nach oben in die Luft abgestrahlt. Die Sendefrequenzen f1, f₂ sind hoch und liegen oberhalb des menschlichen Hörbereichs. Die beiden Sendefrequenzen f₁, f₂ unterscheiden sich um einen Frequenzhub, der im Ausführungsbeispiel zwischen 1 bis 5 kHz liegt.

Zum Erzeugen der Schallenergie ist für jede Sendefrequenz f₁ bzw. f₂ ein Oszillator 13 bzw. 14 vorgesehen. Jeder Oszillator 13, 14 ist über einen Sendepulsgeber oder eine Torschaltung 15, 16 und einen Verstärker 17, 18 mit einem Addierer 19 verbunden, in welchem die beiden Sendefrequenzen f₁ und f₂ addiert werden. Der Ausgang des Addierers 19 ist mit der Sendeantenne 12 verbunden, so daß diese Schallenergie der Sendefrequenz f₁ und der Sendefrequenz f₂ aussendet. Die Impulsdauer der Schallenergieabstrahlung wird durch die beiden Torschaltungen 15, 16 bestimmt, die von einer Zeitsteuerungsschaltung 20 gesteuert werden.

Aufgrund der nichtlinearen akustischen Übertragungseigenschaften des Mediums Luft entstehen infolge der parametrischen Wechselwirkung zwischen den Schallenergien mit den beiden Sendefrequenzen f₁ und f₂ Schallenergie mit der Differenzfrequenz f₁ -f₂ und Schallenergie mit der Summenfrequenz f₁ +f₂, die hier nicht weiter interessiert.

Die Empfangseinrichtung 11 weist eine in Bodennähe installierte Empfangsantenne 21 zum Empfang der zurückgestreuten Echosignale mit der der Differenzfrequenz fi-f₂ entsprechenden Frequenz auf. Die Empfangsantenne 21 ist über einen Empfangsverstärker 22 mit einer Signalverarbeitungsvorrichtung 23 verbunden. In der Signalverarbeitungsvorrichtung 23 wird in dem Anwendungsfall der Windgeschwindigkeitsmessung und Windrichtungsmessung eine Signalverarbeitung durchgeführt, wie sie in den eingangs genannten US-Patentschriften beschrieben ist. Der Ausgang der Signalverarbeitungsvorrichtung 23 ist über eine Torschaltung 24 mit einer Anzeigevorrichtung 25 verbunden.

Die Torschaltung 24 wird ebenfalls von der Zeitsteuerschaltung 20 gesteuert und ermöglicht den Transfer der in der Signalverarbeitungsvorrichtung 23 ermittelten Meßwerte zur Anzeigevorrichtung, wo sie dann dargestellt werden.

Die Funktionsweise des Luftschallecholots ist wie folgt:
Über die Sendeantenne 12 wird in die Atmosphäre Schallenergie mit der Sendefrequenz f₁ und Schallenergie mit der Sendefrequenz f₂ gestrahlt. Durch die sog. parametrische Wechselwirkung zwischen den beiden Schallstrahlen, die mit unterschiedlichen Frequenzen durch die Luft mit ihrer nichtlinearen Übertragungseigenschaften geschickt werden, entsteht ein Strahl einer Schallenergie mit der Differenzfrequenz aus den beiden Sendefrequenzen f₁, f₂, also mit der Frequenz fi-f2. Der Luftschall mit der tiefen Frequenz f₁ -f₂ wird an Inhomogenitäten in der Luft gestreut, und es entstehen Echosignale mit der Frequenz fi-f₂, die von der Empfangsantenne 21 aufgenommen und verstärkt der Signalverarbeitungsvorrichtung 23 zugeführt werden. In der Signalverarbeitungsvorrichtung 23 werden aus dem Empfangssignal die Dopplerfrequenzen bestimmt und daraus die Windgeschwindigkeit berechnet, wie dies in den genannten US-Patentschriften im einzelnen beschrieben ist. Aus der Messung der Laufzeit zwischen Aussenden der Sendeimpulse und Empfangen der Echosignale kann die Höhe über Boden ermittelt werden, in welcher die Windgeschwindigkeit gemessen worden ist.

Die Erfindung ist nicht auf das beschriebene Ausführungsbeispiel beschränkt. So kann anstelle der impulsförmigen Schallenergieaussendung diese auch kontinuierlich erfolgen (Dauerstrich oder CW). Die Festlegung der Höhe, in welcher beispielsweise die Windgeschwindigkeit gemessen werden soll, kann dann durch gerichteten Empfang der Empfangsantenne festgelegt werden.

Weiterhin ist es möglich, die Sendeantenne 12 und die Empfangsantenne 21 zu einer einzigen Wandleranordnung aus einer Vielzahl von elektroakustischen Wandlern zusammenzufassen, wie dies beispielsweise in der US-PS 4 558 594 beschrieben ist.

## Patentansprüche

1. Luftschallecholot zur meteorologischen Fernmessung in der Atmosphäre, insbesondere zur Windmessung (Windgeschwindigkeit, Windrichtung) vom Boden aus, mit einer Sendeeinrichtung (10) mit Sendeantenne (12) zum gerichteten Aussenden von Schallenergie in die Atmosphäre und mit einer Empfangseinrichtung (11) mit Empfangsantenne (21) zum Empfang und Auswerten der zurückgestreuten Echosignale, dadurch gekennzeichnet, daß die Aussendung der Schallenergie gleichzeitig mit zwei unterschiedlichen, jeweils oberhalb des menschlichen Hörbereichs liegenden, hohen Sendefrequenzen (f₁, f₂) erfolgt und der Echoempfang auf Echosignale mit einer der Differenz der beiden Sendefrequenzen (f₁, f₂) entsprechenden Frequenz (fₗ-f₂) abgestellt ist.

2. Luftschallecholot nach Anspruch 1, dadurch gekennzeichnet, daß die Differenz der beiden Sendefrequenzen (f₁, f₂) etwa 1 bis 5 kHz beträgt.
